# EUROPÄISCHE PATENTSCHRIFT

(11) **EP 3 154 782 B1**
(45) Veröffentlichungstag und Bekanntmachung des Hinweises auf die Patenterteilung: **22.08.2018**
(21) Anmeldenummer: 15722473.4
(22) Anmeldetag: 30.04.2015
(51) Int. Cl.: B60N 2/58, B60R 13/02, C14B 5/00, B32B 9/02, C14C 11/00, C14B 7/02

(54) **VERFAHREN ZUR HERSTELLUNG EINES ATMUNGSAKTIVEN LEDERMATERIALS UND VERWENDUNG EINES DURCH DAS VERFAHREN HERGESTELLTEN LEDERMATERIALS**
METHOD FOR PRODUCING BREATHEABLE LEATHER MATERIAL AND USE OF LEATHER MATERIAL PRODUCED ACCORDING TO SAID METHOD
PROCÉDÉ DE PRODUCTION D'UNE MATIÈRE DE CUIR PERMÉABLE À L'AIR ET UTILISATION D'UNE MATIÈRE DE CUIR PRODUITE PAR LEDIT PROCÉDÉ

(30) Priorität: 16.06.2014 DE 102014211511
(43) Veröffentlichungstag der Anmeldung: 19.04.2017
(73) Patentinhaber: Bayerische Motoren Werke Aktiengesellschaft, 80809 München (DE)
(72) Erfinder: LANGLECHNER, Florian, 84453 Mühldorf am Inn (DE); SCHWAIGHOFER, Armin, 80809 München (DE)
(86) Internationale Anmeldenummer: PCT/EP2015/059480
(87) Internationale Veröffentlichungsnummer: WO 2015/193017

(56) Entgegenhaltungen:
- EP-A2- 0 105 046
- EP-A2- 0 362 684
- WO-A1-2005/047549
- DE-U1-202006 011 724
- GB-A- 1 268 763
- US-A1- 2010 263 235

## Beschreibung

Die vorliegende Erfindung betrifft ein Verfahren zur Herstellung von atmungsaktivem Ledermaterial sowie die Verwendung eines nach dem erfindungsgemäßen Verfahren hergestellten Ledermaterials.

Ledermaterialien, also Naturleder und auch Kunstleder, finden weitläufig Anwendung in der Textilindustrie aber auch im Kraftfahrzeugausstattungsbereich. Bis ein Ledermaterial für die Weiterverarbeitung bereitgestellt werden kann, muss es einen aufwendigen Herstellprozess durchlaufen. Naturleder, also Rohleder, wird beispielsweise gegerbt, gespannt, gewalkt und abschließend mit einer Zurichtung versehen, die das Leder strapazierfähiger und vor allen Dingen fleckenunempfindlich und dauerhaft wasserabweisend macht. Die Zurichtung kann eine oder mehrere, auch farbgebende Schichten umfassen. Um eine dauerhaft gleichbleibend gute Qualität eines Ledermaterials zu sichern, muss es atmungsaktiv sein, so dass beispielsweise Feuchtigkeit nicht am Ledermaterial anhaftet und dort zu Stockflecken führt. Hierzu wird in einem abschließenden Schritt das Ledermaterial nach der Applikation der Zurichtung mechanisch perforiert. Nachteilig hieran ist, dass die nachträglich zugefügte Perforierung zu einer starken optischen Beeinträchtigung der Ledermaterialoberfläche führt und damit deren Erscheinungsbild trübt.

Ein Verfahren zur Herstellung von atmungsaktivem Ledermaterial (Oberbegriff des Anspruchs 1) ist aus US2010/0263235 (WO2009/049728) bekannt. Ausgehend von diesem Stand der Technik ist es daher Aufgabe der vorliegenden Erfindung ein Verfahren zur Herstellung eines atmungsaktiven Ledermaterials anzugeben, das einfach umsetzbar ist und optische Beeinträchtigungen des Erscheinungsbildes des Ledermaterials vermeidet. Ferner ist es eine Aufgabe der Erfindung eine Verwendung für ein durch das erfindungsgemäße Verfahren hergestelltes Ledermaterial anzugeben.

Die Aufgabe wird bei einem Verfahren zur Herstellung von atmungsaktivem Ledermaterial gemäß Anspruch 1 gelöst. Erfindungsgemäß kommt als Ledermaterial jegliches Naturlederprodukt sowie Kunstleder oder lederartiges Textilmaterial zur Anwendung. Durch das Perforieren lediglich des Lederbasismaterials vor Applikation der Zurichtung werden folgende Effekte erzielt: zum einen wird das Lederbasismaterial dadurch atmungsaktiv. Dadurch, dass die Zurichtung in einem weiteren Schritt auf die perforierte Oberfläche des Lederbasismaterials aufgebracht wird, werden zum anderen die Perforationen optisch kaschiert. Um die Atmungsaktivität des Ledermaterials nicht zu reduzieren, wird hierbei eine spezielle Applikationsweise der Zurichtung auf das Lederbasismaterial angewandt, nämlich eine Übertragung einer vorab auf einen Trägerkörper aufgebrachten Zurichtung. Würde die Zurichtung wie üblich direkt auf das in diesem Fall bereits perforierte Ledermaterial aufgesprüht, aufgewalzt oder durch Tauchen des Lederbasismaterials in eine Zurichtungszubereitung, aufgebracht, würden die Perforationen aufgrund der Viskosität der Zurichtungszubereitung mit Zurichtung zugesetzt. Dies wird durch das erfindungsgemäße Verfahren verhindert. Die Zurichtung wird durch das punktuelle Applizieren auf den Trägerkörper, beispielsweise ein Folienmaterial, vorgeformt, verliert in soweit an Fließfähigkeit, dass sie nicht vom Trägerkörper abfließt, verfügt aber trotzdem über gute Hafteigenschaften auf dem Lederbasismaterial. Ein Einfließen in die Perforation wird jedoch unterbunden. Eine mechanische Nachbehandlung zur Ausbildung der atmungsaktiven Eigenschaften kann damit entfallen. Das Verfahren ist einfach, ohne hohen technischen Aufwand durch Kombination von Standardprozessen umsetzbar. Zudem kann hierdurch eine punktgenaue Applikation der Zurichtung auf das Lederbasismaterial ausgeführt werden, was einen materialsparenden Einsatz der Zurichtung fördert und die Kosten des erfindungsgemäßen Verfahrens senkt.

Die Unteransprüche beinhalten vorteilhafte Weiterbildungen und Ausgestaltungen der Erfindung. Das erfindungsgemäße Verfahren ist dadurch gekennzeichnet, dass das Aufbringen der Zurichtung auf den Trägerkörper punktuell erfolgt. Hierdurch kann nicht nur die Materialeffizienz gesteigert, sondern auch die Atmungsaktivität des Ledermaterials verbessert werden. Durch die punktuelle Applikation der Zurichtung auf den Trägerkörper wird auch nach Übertragung der Zurichtung auf die Oberfläche des Lederbasismaterials das Applikationsmuster beibehalten. Die Zurichtung ist damit an sich quasi selbst. "perforiert". Die Applikation einer "perforierten" Zurichtung ist mit bisherigen Verfahren nicht befriedigend umsetzbar. Als besonders vorteilhaft im Lichte einer einfachen technischen Umsetzbarkeit hat sich eine Applikation der Zurichtung mittels eines Siebdruckverfahrens herausgestellt.

Eine darüber hinausgehende Verbesserung der Atmungsaktivität des Ledermaterials kann dadurch erzielt werden, dass der Trägerkörper vor dem Aufbringen der Zurichtung perforiert wird.

Aus demselben Grund können auch der Trägerkörper und die Zurichtung vor dem Übertragen der Zurichtung auf die Oberfläche des Lederbasismaterials perforiert werden.

Aufgrund der statistischen Verteilung der Perforationslöcher im Lederbasismaterial und auch in der Zurichtung bzw. im Trägermaterial und der Zurichtung, sei es durch punktuelle Applikation der Zurichtung oder durch Perforation des Trägerkörpers und/oder der Zurichtung, wird ein Großteil der Perforationen im Lederbasismaterial abgedeckt, so dass eine optische Beeinträchtigung des Erscheinungsbildes gering ist, jedoch ein Lederbasismaterial mit sehr guten atmungsaktiven Eigenschaften bereitgestellt werden kann.

Die Übertragung der Zurichtung auf die gewünschten Oberflächenbereiche des Lederbasismaterials kann auf jegliche Art erfolgen, die eine ausreichende Haftung der Zurichtung auf dem Lederbasismaterial erzeugt und eine weitestgehend rückstandsfreie Entfernung des Trägerkörpers ermöglicht. Unter diesen Gesichtspunkten ist es bevorzugt, dass zum Übertragen der Zurichtung der Trägerkörper und/oder die Zurichtung erwärmt wird. Eine Erwärmung des Trägerkörpers bzw. der Zurichtung verringert die Adhäsion der Zurichtung zum Trägerkörper und fördert eine Bindung zum Lederbasismaterial. Vorzugsweise wird als Trägerkörper ein anti-haft beschichteter Trägerkörper, beispielsweise eine Silikon modifizierte Folie, verwendet, die zusätzlich ein Ablösen der Zurichtung vom Trägerkörper fördert. Andere Hilfsvorrichtungen, wie beispielsweise eine Abschabvorrichtung, sind ebenso vorteilhaft möglich.

Das Anhaften der Zurichtung an der Oberfläche des Lederbasismaterials kann dadurch verbessert werden, dass die freiliegende Seite der Zurichtung zum Übertragen der Zurichtung auf die Oberfläche des Lederbasismaterials gedrückt wird. Dies kann zum Beispiel mittels eines Stempels oder einer Walze erfolgen. Die verwendete Zurichtung ist im Einzelnen nicht beschränkt und wird je nach gewünschter Oberflächeneigenschaft des Ledermaterials ausgewählt. Insbesondere umfasst die Zurichtung eine Grundierung und/oder eine farbgebende Zubereitung, wie beispielsweise eine Pigmentdispersion und/oder einen Topcoat. Insbesondere der Topcoat versiegelt dabei die Oberfläche, macht sie kratzfest und schmutz-, sowie wasserabweisend. Die Zurichtung kann in einer oder in mehreren Schichten gleichzeitig oder nacheinander unter Verwendung des erfindungsgemäßen Verfahrens aufgebracht werden.

Zur Herstellung eines besonders hochwertigen Naturlederproduktes ist das Lederbasismaterial ein Naturleder und wird vor der Bereitstellung gegerbt und/oder gespannt und/oder gewalkt.

Ebenfalls erfindungsgemäß wird auch die Verwendung eines nach dem vorstehend dargelegten Verfahren hergestellten Ledermaterials beschrieben, die insbesondere die Herstellung einer Formhaut oder eines Kfz-Ausstattungselements, insbesondere einer Instrumententafel, einer Mittelkonsole, einer Türverkleidung oder eines Sitzbezugs, mit atmungsaktiven Eigenschaften umfasst.

Weitere Einzelheiten, Merkmale und Vorteile der Erfindung ergeben sich aus der nachfolgenden Beschreibung und der Figur. Es zeigt:

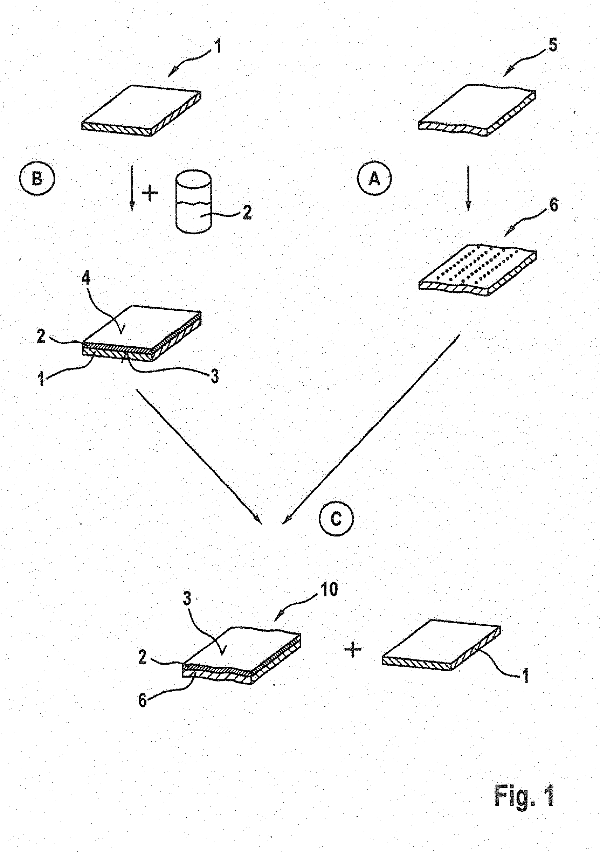

- Figur 1: ein schematisches Ablaufdiagramm zur Veranschaulichung des erfindungsgemäßen Verfahrens.

Die vorliegende Erfindung wird anhand eines Ausführungsbeispiels im Detail erläutert. In Figur 1 sind nur die hier interessierenden Aspekte des erfindungsgemäßen Verfahrens dargestellt, alle übrigen Aspekte sind der Übersichtlichkeit halber weggelassen.

Im Detail gibt Figur 1 eine Übersicht über alle erfindungswesentlichen Schritte des erfindungsgemäßen Verfahrens zur Herstellung eines atmungsaktiven Ledermaterials 10. In einem ersten Verfahrensstrang wird ein Lederbasismaterial 5 bereitgestellt. Dieses kann beispielsweise ein Naturleder oder ein Kunstleder sein, wobei das Naturleder auch gegerbt, gespannt und gewalkt vorliegen kann. In einem ersten Schritt A wird das Lederbasismaterial 5 perforiert. Dies kann mittels herkömmlicher Verfahren, beispielsweise durch ein Walzverfahren, erfolgen. Das Perforationsmuster ist dabei nicht beschränkt aber so ausgebildet, dass das Lederbasismaterial 5 eine gute Atmungsaktivität aufweist.

In einem zweiten Verfahrensstrang wird ein Trägerkörper 1 bereitgestellt, beispielsweise eine anti-haft beschichtete Folie. Ebenfalls wird eine Zurichtung 2 bereitgestellt. Diese kann eine Grundierung und/oder eine farbgebende Zubereitung und/oder eine Topcoat-Zubereitung aufweisen. Die Einzelkomponenten können dabei in separaten Zubereitungen vorgehalten werden oder aber in einer Mischzubereitung.

In einem Verfahrensschritt B wird die Zurichtung 2 auf den Trägerkörper 1 aufgebracht. Dies kann durch gängige Verfahren, beispielsweise durch Aufsprühen, Aufwalzen, Aufpinseln oder dergleichen, vorzugsweise punktuelle, aber auch flächig, erfolgen. Auf diese Weise wird ein mit einer Zurichtung 2 beschichteter Trägerkörper 1 erhalten. Die Zurichtung 2 weist zwei Oberflächen auf, eine erste Oberfläche 3 und eine zweite Oberfläche 4. Die erste Oberfläche 3 ist dem Trägerkörper 1 zugewandt und bildet nach dem Übertragen der Zurichtung 2 auf das perforierte Trägerbasismaterial 6 die Sichtseite des Ledermaterials 10. Die zweite Oberfläche 4 dient der Verbindung zur Oberfläche des perforierten Lederbasismaterials 6.

In einem weiteren Verfahrensschritt C erfolgt ein Übertragen der Zurichtung 2 auf eine Oberfläche des perforierten Lederbasismaterials 6 unter Entfernen des Trägerkörpers 1. In diesem Schritt wird der Trägerkörper 1 und/oder die Zurichtung 2 vorzugsweise erwärmt und die zweite Oberfläche 4 der Zurichtung 2 auf die Oberfläche des perforierten Lederbasismaterials 6 gedrückt.

Je nachdem ob die Zurichtung 2 eine Mischzubereitung ist oder mehrere separate Zubereitungen umfasst, können sich weitere Applikationsschritte einer Zurichtung, wie im Verfahrensstrang B gezeigt, anschließen. So kann auch ein mehrschichtiges Lederbasismaterial hergestellt werden, das lokal auch unterschiedliche Oberflächeneigenschaften oder Farben aufweisen kann.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste:

- 1: Trägerkörper
- 2: Zurichtung
- 3: erste Oberfläche der Zurichtung
- 4: zweite Oberfläche der Zurichtung
- 5: Lederbasismaterial
- 6: perforiertes Lederbasismaterial
- 10: Ledermaterial

## Patentansprüche

1. Verfahren zur Herstellung von atmungsaktivem Ledermaterial (10), umfassend die Schritte:
- Bereitstellen eines Lederbasismaterials (5),
- Perforieren des Lederbasismaterials (5),
- Bereitstellen eines Trägerkörpers (1),
- Aufbringen einer Zurichtung (2) auf den Trägerkörper (1), so dass eine spätere Sichtseite der Zurichtung (1) dem Trägerkörper (1) zugewandt ist und
- Übertragen der Zurichtung (2) auf eine Oberfläche des perforierten Lederbasismaterials (6) und Entfernen des Trägerkörpers (1),
**dadurch gekennzeichnet, dass** das Aufbringen der Zurichtung (2) auf den Trägerkörper (1) punktuell ausgeführt wird.

2. Verfahren nach Anspruch 1, **dadurch gekennzeichnet, dass** das Aufbringen der Zurichtung (2) auf den Trägerkörper (1) mittels eines Siebdruckverfahrens ausgeführt wird.

3. Verfahren nach Anspruch 1 oder 2, **dadurch gekennzeichnet, dass** der Trägerkörper (1) vor dem Aufbringen der Zurichtung (2) perforiert wird.

4. Verfahren nach einem der vorhergehenden Ansprüche, **dadurch gekennzeichnet, dass** der Trägerkörper (1) und die Zurichtung (2) vor dem Übertragen der Zurichtung (2) perforiert werden.

5. Verfahren nach einem der vorhergehenden Ansprüche, **dadurch gekennzeichnet, dass** der Trägerkörper (1) und/oder die Zurichtung (2) zum Übertragen der Zurichtung (2) erwärmt wird.

6. Verfahren nach einem der vorhergehenden Ansprüche, **dadurch gekennzeichnet, dass** zum Übertragen der Zurichtung (2) die freiliegende Seite der Zurichtung (2) auf die Oberfläche des Lederbasismaterials (6) gedrückt wird.

7. Verfahren nach einem der vorhergehenden Ansprüche, **dadurch gekennzeichnet, dass** die Zurichtung (2) eine Grundierung und/oder eine farbgebende Zubereitung und/oder einen Topcoat umfasst.

8. Verfahren nach einem der vorhergehenden Ansprüche, **dadurch gekennzeichnet, dass** das Lederbasismaterial (5) ein Naturleder ist und vor der Bereitstellung gegerbt und/oder gespannt und/oder gewalkt wird.

9. Verwendung eines nach einem der vorhergehenden Ansprüche hergestellten Ledermaterials (10) zur Herstellung einer Formhaut oder eines Kfz-Ausstattungselements, insbesondere einer Instrumententafel, einer Mittelkonsole, einer Türverkleidung oder eines Sitzbezugs.

## Claims

1. A method for producing breatheable leather material (10), comprising the steps:
- making available a leather base material (5),
- perforating the leather base material (5),
- making available a support body (1),
- applying a finish (2) to the support body (1), so that a later visible side of the finish (2) faces the support body (1), and
- transferring the finish (2) to a surface of the perforated leather base material (6) and removing the support body (1),
**characterised in that** the application of the finish (2) to the support body (1) is carried out in localised manner.

2. A method according to Claim 1, **characterised in that** the application of the finish (2) to the support body (1) is carried out by means of a screenprinting process.

3. A method according to Claim 1 or Claim 2, **characterised in that** the support body (1) is perforated prior to the application of the finish (2).

4. A method according to one of the preceding claims, **characterised in that** the support body (1) and the finish (2) are perforated prior to the transfer of the finish (2).

5. A method according to one of the preceding claims, **characterised in that** the support body (1) and/or the finish (2) is/are heated in order to transfer the finish (2).

6. A method according to one of the preceding claims, **characterised in that** in order to transfer the finish (2) the exposed side of the finish (2) is pressed onto the surface of the leather base material (6).

7. A method according to one of the preceding claims, **characterised in that** the finish (2) comprises a primer and/or a colouring preparation and/or a top coat.

8. A method according to one of the preceding claims, **characterised in that** the leather base material (5) is a natural leather and is tanned and/or stretched and/or fulled prior to being made available.

9. Use of a leather material (10) produced according to one of the preceding claims for producing a moulded skin or a motor vehicle trim element, especially an instrument panel, a centre console, a door trim or a seat cover.

## Revendications

1. Procédé de fabrication d'un matériau de cuir perméable à l'air (10) comprenant des étapes consistant à :
- se procurer un matériau à base de cuir (5),
- perforer le matériau à base de cuir (5),
- se procurer un corps de support (1),
- appliquer un habillage (2) sur le corps de support (1) de sorte que la face visible ultérieure de cet habillage (2) soit tournée vers le corps de support (1), et
- transférer l'habillage (2) sur une surface du matériau à base de cuir perforé (6) et éliminer le corps de support (1),
**caractérisé en ce que**
l'application de l'habillage (2) sur le corps de support (1) est effectuée ponctuellement.

2. Procédé conforme à la revendication 1,
**caractérisé en ce que**
l'application de l'habillage (2) sur le corps de support (1) est effectuée par un procédé de sérigraphie.

3. Procédé conforme à la revendication 1 ou 2,
**caractérisé en ce que**
le corps de support (1) est perforé avant l'application de l'habillage (2).

4. Procédé conforme à l'une des revendications précédentes,
**caractérisé en ce que**
le corps de support (1) et l'habillage (2) sont perforés avant le transfert de l'habillage (2).

5. Procédé conforme à l'une des revendications précédentes,
**caractérisé en ce que**
le corps de support (1) et/ou l'habillage (2) est(sont) chauffé(s) pour permettre le transfert de l'habillage (2).

6. Procédé conforme à l'une des revendications précédentes,
**caractérisé en ce que**
pour permettre le transfert de l'habillage (2), la face libre de celui-ci est comprimée sur la surface du matériau à base de cuir (6).

7. Procédé conforme à l'une des revendications précédentes,
**caractérisé en ce que**
l'habillage (2) comporte un apprêt et/ou une préparation de coloration et/ou une couche de finition.

8. Procédé conforme à l'une des revendications précédentes,
**caractérisé en ce que**
le matériau à base de cuir (5) est un cuir naturel et est tanné et/ou tendu et/ou foulonné avant sa mise à disposition.

9. Utilisation d'un matériau de cuir (10) obtenu conformément à l'une des revendications précédentes pour l'obtention d'une peau moulée ou d'un élément de garnissage de véhicule en particulier un tableau de bord, une console médiane, un habillage de porte ou une housse de siège.
